# EUROPEAN PATENT APPLICATION

(11) **EP 2 410 542 A2**
(43) Date of publication of application: **25.01.2012**
(21) Application number: 11164713.7
(22) Date of filing: 04.05.2011
(51) Int. Cl.: H01G 9/20

(54) **Photoelectric module**

(30) Priority: 19.07.2010 KR 20100069605
(71) Applicant: Samsung SDI Co., Ltd., Yongin-si, Gyeonggi-do (KR)
(72) Inventor: Yang, Nam-Choul, Gyeonggi-do (KR); Song, Jung-Suk, Gyeonggi-do (KR); Lee, Jong-Ki, Gyeonggi-do (KR); Kim, Hyun-Chul, Gyeonggi-do (KR); Jung, Joo-Sik, Gyeonggi-do (KR); You, Suk-Beom, Gyeonggi-do (KR)
(74) Representative: Walaski, Jan Filip

(57) **Abstract**

A photoelectric module including an island type, or discrete, connecting member. A photoelectric module includes: a first substrate and a second substrate, which are disposed to face each other; a sealing member disposed between the first and second substrates, and defining a plurality of photoelectric cells for performing photoelectric conversion; and an island type connecting member connecting neighbouring photoelectric cells from among the plurality of photoelectric cells. Adjacent cells may be electrically connected by a plurality of connecting members arranged at discrete points along the boundary between the adjacent cells.

## Description

The present invention relate to a photoelectric module, also referred to as a photoelectric conversion module or device.

Photoelectric devices convert light energy into electric energy and have been studied as an energy source for replacing fossil fuels, and solar cells using sunlight have come into the spotlight.

Various types of solar cells having various driving principles have been investigated. Silicon or crystalline solar cells have a wafer shape and include a p-n semiconductor junction, but the manufacturing costs thereof are high due to the characteristics of processes for forming and handling semiconductor materials having a high degree of purity.

Unlike silicon solar cells, dye-sensitized solar cells mainly include a photosensitive dye for generating excited electrons in response to visible light, a semiconductor material for receiving the excited electrons, and an electrolyte for reacting with the excited electrons in an external circuit. Dye-sensitized solar cells have high photoelectric conversion efficiency compared to silicon solar cells, and thus are expected to be the next generation of solar cells.

A series connection structure of such dye-sensitized solar cells includes a Z type, a W type, a monolith type, or an in-plane type. Here, a conducting structure for connecting adjacent cells is required in the Z type, and thus the light receiving area is reduced.

One or more embodiments of the present invention include a photoelectric conversion module, wherein an aperture ratio and photoelectric conversion efficiency are increased by using an island type connecting member for connecting photoelectric cells.

Additional aspects will be set forth in part in the description which follows and, in part, will be apparent from the description, or may be learned by practice of the presented embodiments.

According to one or more embodiments of the present invention, a photoelectric conversion module includes: a first substrate and a second substrate, which are disposed to face each other; a sealing member disposed between the first and second substrates, and defining a plurality of photoelectric cells performing photoelectric conversion; and an island type connecting member connecting neighbouring photoelectric cells from among the plurality of photoelectric cells.

Each of the plurality of photoelectric cells may include a first electrode and a second electrode having different polarities, and the island type connecting member may extend to contact the first electrode of any one of the neighbouring photoelectric cells and the second electrode of the other one of the neighbouring photoelectric cells.

At least one of the first and second electrodes may include a metal electrode having a stripe pattern.

A width of the stripe pattern of the metal electrode may be from about 5 mm to about 15 mm.

The sealing member may include: a cell divider dividing the plurality of photoelectric cells; and an accommodation hole accommodating the island type connecting member.

The accommodation hole may be formed to penetrate a partial area of the cell divider.

A thickness of the cell divider where the accommodation hole is not formed may be thinner than a thickness of the cell divider where the accommodation hole is formed.

The island type connecting member may be disposed between the neighbouring photoelectric cells.

A plurality of the island type connecting members may be disposed apart from each other.

The island type connecting member may include a metal or a conductive resin.

The plurality of photoelectric cells may extend along one side unit of the first and second substrates and may be disposed parallel to each other.

According to one or more embodiments of the present invention, a photoelectric conversion module includes: a plurality of photoelectric cells performing photoelectric conversion and disposed between a first substrate and a second substrate facing the first substrate; and at least one island type connecting member disposed between neighbouring photoelectric cells from among the plurality of photoelectric cells and connecting the neighbouring photoelectric cells.

Each of the plurality of photoelectric cells may include: a first electrode and a second electrode respectively formed on the first substrate and the second substrate; a semiconductor layer formed on the first electrode; and an electrolyte disposed between the semiconductor layer and the second electrode.

The at least one island type connecting member may extend to connect the first electrode of any one of the neighbouring photoelectric cells and the second electrode of the other one of the neighbouring photoelectric cells.

The plurality of photoelectric cells may be defined by a sealing member including cell dividers that extend in one direction and are disposed parallel to each other. An accommodation hole for penetrating a partial area of the cell divider may be formed on each of the cell dividers, and the at least one island type connecting member may be accommodated in the accommodation hole.

A thickness of an area of the cell divider where the accommodation hole is not formed may be thinner than an entire thickness of an area of the cell divider where the accommodation hole is formed.

According to another aspect of the invention, there is provided a photoelectric device comprising first and second substrates, a sealing member disposed between the first and second substrates defining a plurality of photoelectric cells and a plurality of connecting members electrically connecting adjacent photoelectric cells at a plurality of discrete connecting points disposed along the boundary between the adjacent cells.

A more complete appreciation of the present invention, and many of the attendant advantages thereof, will become readily apparent as the same becomes better understood by reference to the following detailed description when considered in conjunction with the accompanying drawings, in which like reference symbols indicate the same or similar components, wherein:
FIG. 1 illustrates a plane structure of a photoelectric conversion module according to an embodiment of the present invention;
FIG. 2 illustrates an exploded perspective view of the photoelectric conversion module of FIG. 1;
FIG. 3 illustrates a cross-sectional view taken along a line III-III of FIG. 1;
FIG. 4 illustrates a cross-sectional view taken along a line IV-IV of FIG. 1;
FIG. 5 illustrates an exploded perspective view schematically illustrating a photoelectric conversion module according to another embodiment of the present invention; and
FIG. 6 illustrates a perspective view of a partial structure of FIG. 5, wherein a first electrode including a metal electrode is connected to a second electrode including another metal electrode via an island type connecting member.

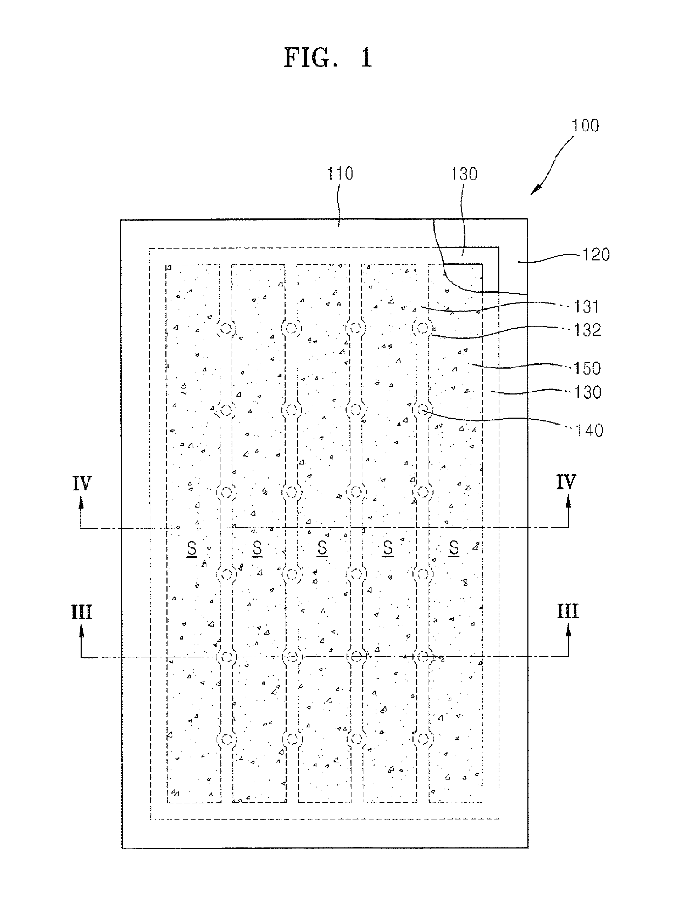

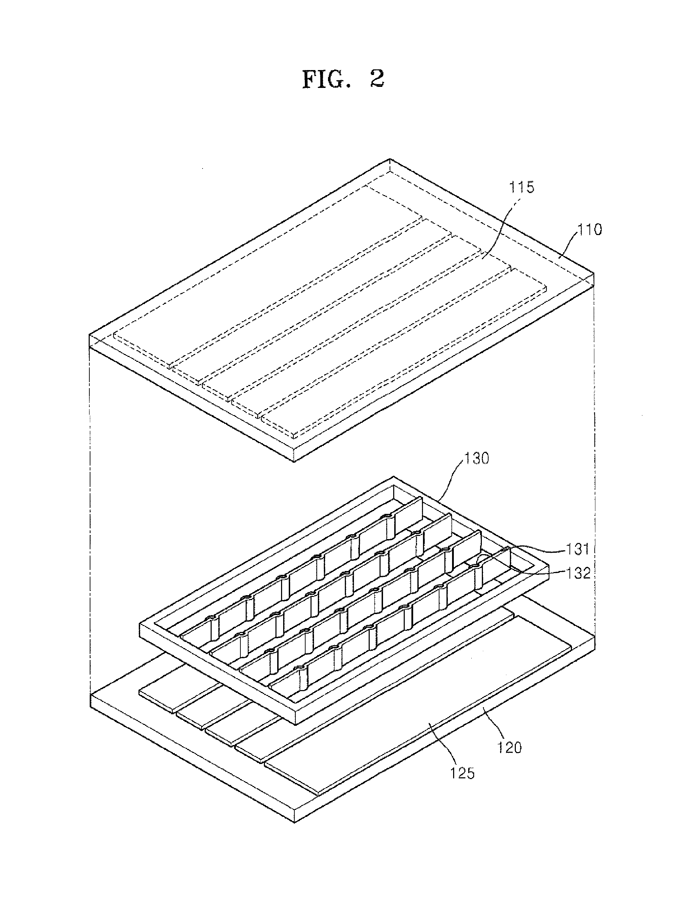

FIG. 1 illustrates a plane structure of a photoelectric conversion module 100 according to an embodiment of the present invention, and FIG. 2 illustrates an exploded perspective view of the photoelectric conversion module 100 of FIG. 1.

The photoelectric conversion module 100 includes one or more photoelectric cells S, which are defined by a sealing member 130. The plurality of photoelectric cells S may be disposed parallel to each other in one direction, and may be modularized by being physically supported between a first substrate 110 and a second substrate 120.

An electrolyte 150 is filled in the photoelectric cell S. The electrolyte 150 is sealed by the sealing member 130 which surrounds the photoelectric cells S overall and is disposed between the neighbouring photoelectric cells S. In other words, the sealing member 130 is disposed around the electrolyte 150 to surround the electrolyte 150, thereby preventing the electrolyte 150 from leaking.

Meanwhile, the sealing member 130 includes at least one space for accommodating the photoelectric cells S. When the plurality of photoelectric cells S are included, the space for accommodating the photoelectric cells S is defined by a cell divider 131 disposed between the photoelectric cells S. For example, when the photoelectric cells S are disposed parallel to each other in one direction, a plurality of the cell dividers 131 may be disposed parallel to each other while being spaced apart from each other.

The sealing member 130 includes at least one space for accommodating an island type connecting member 140, also referred to as a discrete or an individual connecting member. The space for accommodating the island type connecting member 140 is defined by an accommodation hole 132 formed to penetrate a partial area of the cell divider 131. When a plurality of the island type connecting members 140 are included, the accommodation holes 132 are spaced apart from each other. In other words, adjacent photoelectric cells S can be connected in series by providing a plurality of discrete connecting members 140 along the boundary between the adjacent cells, or, alternatively stated, by providing connecting members 140 at a plurality of discrete points along the boundary.

The island type connecting member 140 disposed in the accommodation hole 132 connects one photoelectric cell S to another photoelectric cell S, and the photoelectric cells S are electrically connected via the island type connecting member 140. For example, the island type connecting member 140 electrically connects the photoelectric cells S on each side of the corresponding cell divider 131.

Meanwhile, since the cell divider 131 surrounds the island type connecting member 140, the island type connecting member 140 is protected from the electrolyte 150 included in the photoelectric cell S. Accordingly, a thickness of the cell divider 131 where the accommodation hole 132 is formed may be thicker than a thickness of the cell divider 131 where the accommodation hole 132 is not formed. Also, as shown in FIGS. 1 and 2, an area where the accommodation hole 132 is formed may protrude from the cell divider 131. In FIG. 2, an inner part of the accommodation hole 132 is a hollow cylinder, but a shape of the accommodation hole 132 is not limited thereto. For example, the shape of the accommodation hole 132 may vary, such as a polygonal pillar.

Functional layers 115 and 125 for performing photoelectric conversion are respectively formed on the first and second substrates 110 and 120, as shown in FIG. 2.

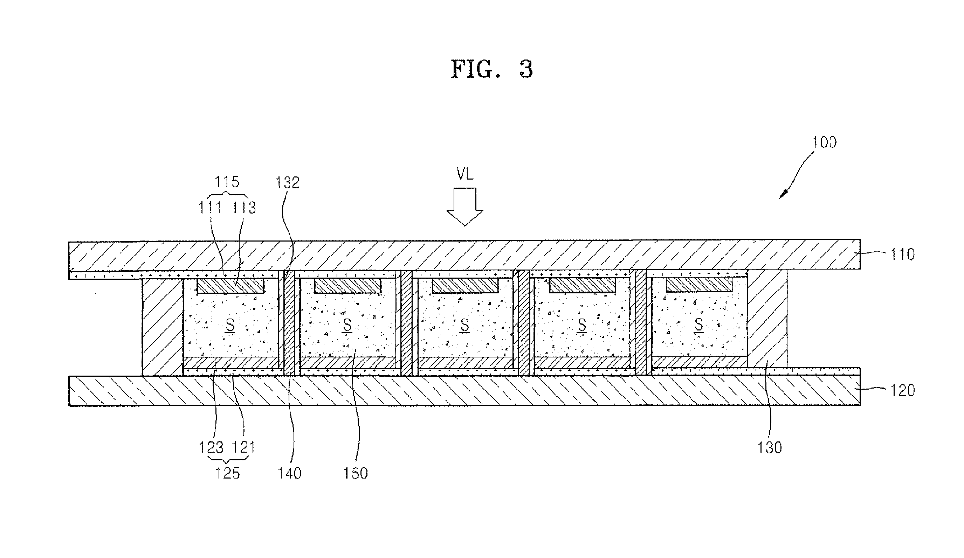

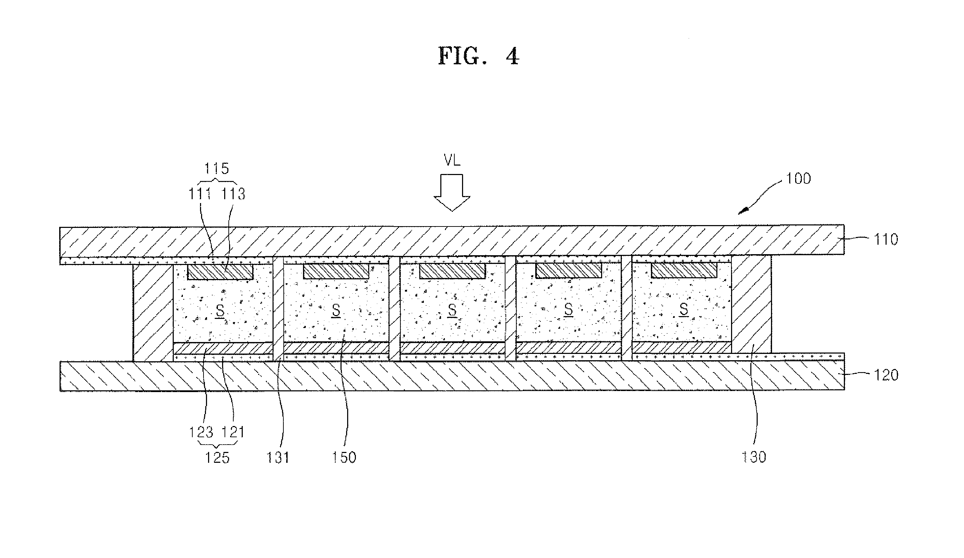

FIG. 3 illustrates a cross-sectional view taken along a line III-III of FIG. 1, and FIG. 4 illustrates a cross-sectional view taken along a line IV-IV of FIG. 1. The photoelectric cells S are connected to each other via the island type connecting members 140, and thus connection points between the neighbouring photoelectric cells S are disposed apart from each other. Accordingly, an area where the island type connecting member 140 is included as shown in FIG. 3, and an area where the island type connecting member 140 is not included as shown in FIG. 4 coexist. In other words, the connecting members 140 are discontinuously formed.

Referring to FIGS. 3 and 4, the photoelectric conversion module 100 includes the first and second substrates 110 and 120, which are disposed to face each other, and the sealing member 130 disposed between the first and second substrates 110 and 120. Also, the photoelectric conversion module 100 includes at least one photoelectric cell S defined by the sealing member 130. The functional layers 115 5 and 125 for performing photoelectric conversion are respectively formed on the first and second substrates 110 and 120. The functional layer of the first substrate 110 includes a photoelectrode 111 and a semiconductor layer 113, and the functional layer 125 of the second substrate 120 includes a counter electrode 121 and a catalyst layer 123.

The first and second substrates 110 and 120 may have a roughly rectangular shape. The first substrate 110 is disposed on the top of the photoelectric conversion module 100 and the second substrate 120 is disposed on the bottom of the photoelectric conversion module 100.

The first substrate 110 may be a light-receiving substrate, and may be formed of a transparent material having high light transparency. The first substrate 110 may be formed of, for example, glass or a resin film. Since the resin film is flexible, the resin film may be used when the first substrate 110 needs to be flexible.

The second substrate 120 is a counter substrate, and is disposed to face the first substrate 110 constituting the light-receiving substrate. The counter substrate may not specifically be transparent, but may be formed of a transparent material to receive a light VL from both sides so as to increase photoelectric conversion efficiency. The counter substrate may be formed of the same material as the light-receiving substrate. For example, when the photoelectric conversion module 100 is used for a building integrated photovoltaic (BIPV) purpose that is installed in a structure such as a window frame, the first and second substrates 110 and 120 may be formed of a transparent material so as not to block the light VL incident into a room.

The first and second substrates 110 and 120 are separated by a predetermined gap in which the sealing member 130 is disposed. The photoelectrode 111 and the counter electrode 121 are respectively formed on the first substrate 110 and the second substrate 120. The semiconductor layer 113, on which a photosensitive dye that is excited by the light VL is adsorbed, is formed on the photoelectrode 111, and the electrolyte 150 is disposed between the photoelectrode 111/semiconductor layer 113 and the catalyst layer 123.

The photoelectrode 111 operates as a negative electrode of the photoelectric conversion module 100, and provides a current path by collecting electrons generated according to photoelectric conversion. The light VL incident through the photoelectrode 111 operates as an excitation source of the photosensitive dye adsorbed on the semiconductor layer 113. The photoelectrode 111 may be formed of a transparent conducting oxide (TCO), such as an indium tin oxide (ITO), fluorine tin oxide (FTO) or antimony tin oxide (ATO), which have electrical conductivity and light transparency.

The semiconductor layer 113 may be formed by using a semiconductor material used to form a general photoelectric conversion module. Alternatively the semiconductor layer 113 may be formed of a metal oxide. Examples of the metal oxide include cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si), and chrome (Cr).

The photoelectric conversion efficiency may be increased by adsorbing the photosensitive dye to the semiconductor layer 113. For example, the semiconductor layer 113 may be formed by coating a paste, in which semiconductor particles having a particle diameter from about 5 nm to about 1000 nm are dispersed, on first substrate 110 including photoelectrode 111, and then applying a predetermined heat or pressure to the first substrate 110.

The photosensitive dye adsorbed to the semiconductor layer 113 absorbs the light VL incident through the first substrate 110, and electrons of the photosensitive dye are excited from a ground state. The excited electrons move to a conduction band of the semiconductor layer 113 through electric combination of the photosensitive dye and the semiconductor layer 113, and then reach the photoelectrode 111 through the semiconductor layer 113. Next, the excited electrons are externally extracted out of the photoelectric conversion module 100 through the photoelectrode 111 thereby forming a driving current for driving an external circuit (not shown).

The photosensitive dye is absorbed in a visible ray band, and may be configured as molecules for quickly transferring the electrons from a light excitation state to the semiconductor layer 113. The photosensitive dye may be in a liquid state, a semisolid gel state or a solid state. For example, a ruthenium-based photosensitive dye may be used.

A redox electrolyte including a pair of an oxidized material and a reduced material may be used as the electrolyte 150 filled in the photoelectric cell S. Any one of a solid electrolyte, a gel electrolyte, and a liquid electrolyte may be used as the electrolyte 150.

The counter electrode 121 operates as a positive electrode of the photoelectric conversion module 100. The photosensitive dye adsorbed to the semiconductor layer 113 is excited by absorbing the light VL, and the excited electrons are externally extracted through the photoelectrode 111. Meanwhile, the photosensitive dye, which loses the electrons, is then reduced as it receives electrons provided by oxidation of the electrolyte 150. The oxidized electrolyte 150 is reduced as it receives electrons that have reached the counter electrode 121 through the external circuit, thereby completing the photoelectric conversion.

Similar to the photoelectrode 111, the counter electrode 121 may be formed of a transparent conducting oxide (TCO), such as an indium tin oxide (ITO), fluorine tin oxide (FTO), or antimony tin oxide (ATO), which has electrical conductivity and light transparency.

The catalyst layer 123 may be formed on the counter electrode 121. The catalyst layer 123 may be formed of a material having a reduction catalyst function providing electrons. The catalyst layer 123 may be formed of, for example, a metal such as platinum (Pt), gold (Au), silver (Ag), or aluminum (Al), a metal oxide such as a tin oxide, or a carbon-based material such as graphite.

The plurality of photoelectric cells S may be connected in series via at least one connection point. The island type connecting member 140 forms the connection point by being disposed in the accommodation hole 132 formed in the cell divider 131. The island type connecting member 140 extends so that an upper side portion of the island type connecting member 140 contacts with an end portion of the photoelectrode 111 of a first cell S, and a lower side portion of the island type connecting member 140 contacts with an end portion of the counter electrode 121 of a second cell S neighbouring the first cell S. Thereby, the island type connecting member 140 connects the cells S in series.

A metal such as silver (Ag) or nickel (Ni) having excellent conductivity, or a conductive resin may be used as a conductive material for the island type connecting member 140. An example of the conductive resin includes a room temperature hardening conductive resin. Meanwhile, since the island type connecting member 140 is disposed in the accommodation hole 132 formed in the cell divider 131, the island type connecting member 140 is protected from the electrolyte 150. The required number of the island type connecting members 140 may be determined considering a size of the photoelectric conversion module 100 and efficiency according to the size.

Since the photoelectric cells S are connected to each other via the island type connecting member 140, the cell divider 131 includes an area where the accommodation hole 132 for accommodating the island type connecting member 140 is formed (FIG. 3), and the area where the accommodation hole 132 is not formed (FIG. 4). Here, the area where the accommodation hole 132 is formed is relatively thicker than the area where the accommodation hole 132 is not formed, since the cell divider 131 surrounds the island type connecting member 140 so as to protect the island type connecting member 140 from the electrolyte 150.

On the other hand, the thickness of the cell divider 131 may be thin since the area where the accommodation hole 132 is not formed (FIG. 4) only has to define the neighbouring photoelectric cells S. Since the thickness of the cell divider 131 is thin, a dead area (where the cell divider 131 is disposed adjacent the electrodes) not capable of absorbing the light VL decreases and an active area capable of absorbing the light VL relatively increases. Thus, a current amount increases, thereby increasing an output of the photoelectric conversion module 100.

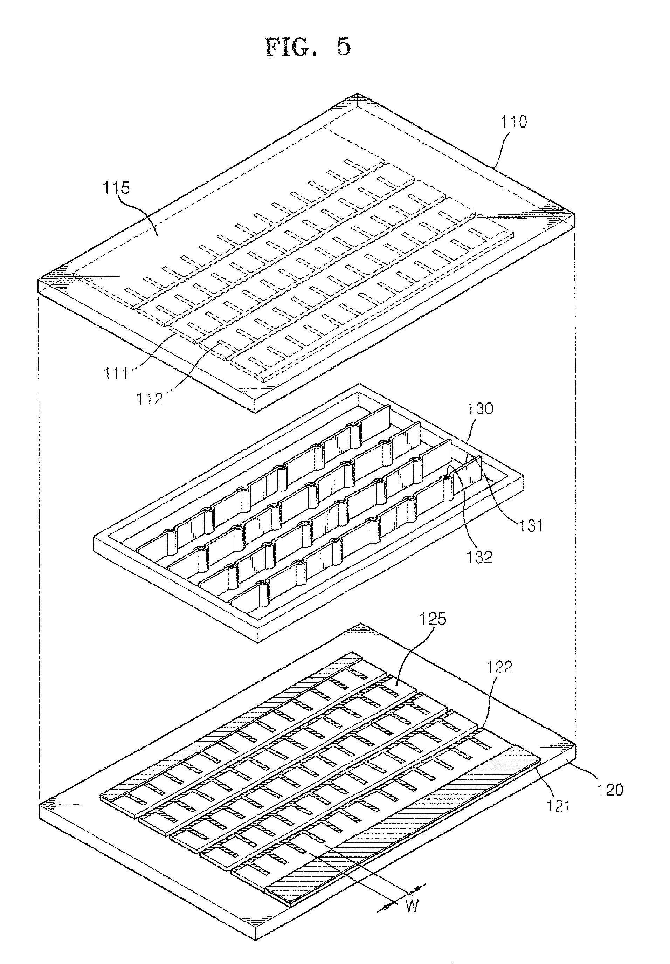

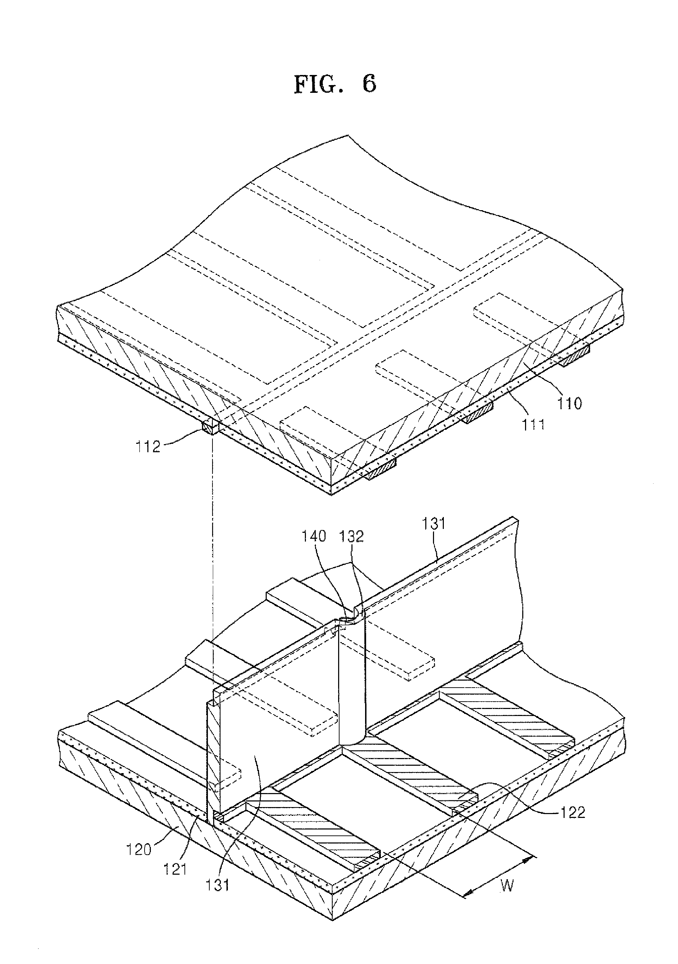

FIG. 5 illustrates an exploded perspective view schematically illustrating a photoelectric conversion module according to another embodiment of the present invention, and FIG. 6 illustrates a perspective view of a partial structure of the photoelectric conversion module, in which the photoelectric cells S are connected in series by the island type connecting member 140 forming a contacting point.

Referring to FIG. 5, the photoelectric conversion module according to this embodiment of the present invention includes the first substrate 110 and the second substrate 120, which are disposed to face each other, and the sealing member 130 disposed between the first and second substrates 110 and 120. Also, the photoelectric conversion module includes at least one photoelectric cell S defined by the sealing member 130. The functional layers 115 and 125 for performing photoelectric conversion are respectively formed on the first substrate 110 and the second substrate 120. The functional layer 115 of the first substrate 110 includes the photoelectrode 111, the metal electrodes 112 and the semiconductor layer (not shown), and the functional layer 125 of the second substrate 120 includes the counter electrode 121, the metal electrodes 122 and the catalyst layer (not shown).

The photoelectric conversion module according to this embodiment is different from the photoelectric conversion module 100 according to the previous embodiment, in that metal electrodes 112 and 122 are respectively formed on the photoelectrode 111 and the counter electrode 121. The semiconductor layer (not shown) may be formed on the metal electrode 112 and the photoelectrode 111, and the catalyst layer (not shown) may be formed on the metal electrode 122 and the counter electrode 121. The metal electrodes 112 and 122 may be formed of a material, such as Ag, Au, or Al, having excellent electrical conductivity. The metal electrodes 112 and 122 are used to decrease electrical resistance of the photoelectrode 111 and the counter electrode 121, and may have a stripe or mesh pattern. In FIGS. 5 and 6, the metal electrodes 112 and 122 have a stripe pattern, also referred to as a comb pattern.

The photoelectrode 111, the counter electrode 121, and the metal electrodes 112 and 122 are electrically connected via the island type connecting member 140. In FIG. 6, the photoelectrode 111 and the metal electrode 112 formed on the first substrate 110 are connected to the metal electrode 122 and the counter electrode 121 formed on the second substrate 120 via the island type connecting member 140. Here, if a spacing (or width) W of the fingers of the comb pattern of the metal electrodes 112 and 122 is too small, electrical resistance may be decreased but a dead area increases, and thus an output is deteriorated. On the other hand, if the spacing W is too wide, the electrical resistance increases, and thus the output is deteriorated. Accordingly, the spacing W may be from about 5 mm to about 15 mm, and in one embodiment, may be about 10 mm.

The metal electrodes 112 and 122 may be protected from an electrolyte accommodated in the photoelectric cell S by being covered by a protective layer (not shown). The protective layer may be formed of a glass frit-based or resin-based material having insulating properties.

The photoelectric conversion module according to the current embodiment includes the island type connecting member 140, and thus the active area capable of absorbing the light VL is increased. Accordingly, an output of the photoelectric conversion module may be increased. Moreover, by further including the metal electrodes 112 and 122 having a grid interval from about 5 mm to about 15 mm, the output increases further.

The required number of the island type connecting members 140 may be determined while considering a size of the photoelectric conversion module. For example, if a length of the photoelectric conversion module is about 75 mm, the number of island type connecting members 140 disposed between neighbouring photoelectric cells S may be from about 1 to about 10, in one embodiment, about 6.

As described above, according to the one or more of the above embodiments of the present invention, photoelectric cells are connected to each other by using at least one island type, or discrete, connecting member as the connection point, and thus an aperture ratio is increased, thereby increasing photoelectric conversion efficiency.

Also, by point-connecting the photoelectric cells using the island type connecting member and employing a simple structure, manufacturing costs may be reduced and productivity may be increased.

It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A photoelectric module comprising:
first and second substrates (110, 120);
a sealing member (130) disposed between the first and second substrates defining a plurality of photoelectric cells S; and
an island type connecting member (140) connecting neighbouring photoelectric cells.

2. The photoelectric module of claim 1, wherein each of the plurality of photoelectric cells comprises a first electrode (111) and a second electrode (121) having different polarities, and the island type connecting member (140) extends to contact the first electrode of a first one of the neighbouring photoelectric cells and the second electrode of a second one of the neighbouring photoelectric cells.

3. The photoelectric module of claim 2, wherein the first electrode comprises a photoelectrode (111) and the second electrode comprises a counter electrode (121), further comprising:
a semiconductor layer (113) formed on the photoelectrode; and
an electrolyte disposed between the semiconductor layer and the counter electrode (121).

4. The photoelectric module of claim 2 or 3, wherein at least one of the first and second electrodes comprises a metal electrode having a comb pattern.

5. The photoelectric module of claim 4, wherein the electrode fingers of the comb pattern are spaced apart from each other by between about 5 mm to about 15 mm.

6. The photoelectric module of any one of the preceding claims, wherein the sealing member comprises:
a cell divider (131) partitioning the plurality of photoelectric cells; and
an accommodation hole (132) accommodating the island type connecting member.

7. The photoelectric module of claim 6, wherein the accommodation hole comprises a through hole in the cell divider.

8. The photoelectric module of claim 7, wherein the cell divider is thicker in the region of the accommodation hole than in other regions of the cell divider.

9. The photoelectric module of any one of the preceding claims, wherein the island type connecting member is disposed between the neighbouring photoelectric cells.

10. The photoelectric module of any one of the preceding claims, wherein a plurality of the island type connecting members are disposed spaced apart from each other.

11. The photoelectric module of any one of the preceding claims, wherein the island type connecting member comprises a metal or a conductive resin.

12. The photoelectric module of any one of the preceding claims, wherein the plurality of photoelectric cells are disposed parallel to each other between the first and second substrates.
